# EUROPÄISCHE PATENTSCHRIFT

(11) **EP 1 387 720 B1**
(45) Veröffentlichungstag und Bekanntmachung des Hinweises auf die Patenterteilung: **13.02.2008**
(21) Anmeldenummer: 02740529.9
(22) Anmeldetag: 26.04.2002
(51) Int. Cl.: B01D 3/00, B01D 3/20, B01J 8/22

(54) **REAKTOR FÜR GAS/FLÜSSIG- ODER GAS/FLÜSSIG/FEST-REAKTIONEN**
REACTOR FOR GAS/LIQUID OR GAS/LIQUID/SOLID REACTIONS
REACTEUR POUR REACTIONS GAZ/LIQUIDE OU GAZ/LIQUIDE/SOLIDE

(30) Priorität: 27.04.2001 DE 10120801
(43) Veröffentlichungstag der Anmeldung: 11.02.2004
(73) Patentinhaber: BASF Aktiengesellschaft, 67056 Ludwigshafen (DE)
(72) Erfinder: BENFER, Regina, 67122 Altrip (DE); NILLES, Michael, 18, Xizang Zhong Rd., Shanghai 200001 (CN); WEINLE, Werner, 74177 Bad Friedrichshall (DE); ZEHNER, Peter, 67071 Ludwigshafen (DE)
(74) Vertreter: Isenbruck, Günter
(86) Internationale Anmeldenummer: PCT/EP2002/004653
(87) Internationale Veröffentlichungsnummer: WO 2002/087723

(56) Entgegenhaltungen:
- EP-A- 0 461 855
- EP-A- 0 571 163
- WO-A-90/08127
- DE-A- 1 542 274
- DE-A- 4 237 350
- US-A- 2 762 683
- US-A- 4 869 851
- DEGARMO J L ET AL: "CONSIDER REACTIVE DISTILLATION" CHEMICAL ENGINEERING PROGRESS, AMERICAN INSTITUTE OF CHEMICAL ENGINEERS. NEW YORK, US, Bd. 88, Nr. 3, 1. März 1992 (1992-03-01), Seiten 43-50, XP000246044 ISSN: 0360-7275

## Beschreibung

Die Erfindung betrifft einen Reaktor für gas/flüssig oder gas/flüssig/fest-Reaktionen sowie seine Verwendung.

Für mehrphasige Reaktionen ist eine gute Durchmischung der Phasen Voraussetzung für hohe Umsatzgrade. Hierfür werden häufig Rührkessel eingesetzt. Rührkessel sind jedoch nachteilig, da sie bewegte Apparateteile erfordern und daß zur Durchführung langsamer Gleichgewichtsreaktionen, die auf einen hohen Endumsatz gebracht werden sollen und bei denen ein Koppelprodukt kontinuierlich als Dampf ausgestrippt wird, ein sehr großes Rührkesselvolumen erforderlich ist. Zur Durchführung derartiger Reaktionen sind Rührkesselkaskaden bekannt, sie haben jedoch den Nachteil, daß entsprechend viele Einzelapparate notwendig sind.

Es ist auch bekannt, mehrphasige Reaktionen in Reaktivdestillationskolonnen durchzuführen. Hierbei ist jedoch der Flüssigkeitshold-up auf den Böden begrenzt. Insbesondere bei langsam verlaufenden Gleichgewichtsreaktionen müßte der Flüssigkeits hold-up so groß gewählt werden, daß die gasseitigen Durckverluste über die Böden sehr groß werden. Dadurch stellt sich in der Kolonne über mehrere Böden eine große Temperaturspreizung mit sehr unterschiedlichen Reaktionsgeschwindigkeiten ein. Das kann bei empfindlichen Produkten im unteren Abschnitt der Kolonne zu Produktzersetzung oder -schädigung führen, während im oberen Abschnitt die Reaktion wegen zu niedriger Temperatur einschläft.

Dokument WO 90/08127 beschreibt einen Veresterungsreaktor mit einer Mehrzahl von Böden, mit Strömung des flüssigen Reaktionsgemisches von oben nach unten, wobei das Gas über einen Gasverteiler unterhalb des Flüssigkeitsspiegels auf jeden Boden in die Flüssigkeit eingeleitet wird und um den Gasverteiler ein Leitblech angeordnet ist, dergestalt, dass in der Flüssigkeit eine interne Schlaufenbewegung induziert wird, die im Bereich der aufströmenden Gasblasen nach oben und außerhalb der Zone der aufsteigenden Gasblasen nach unten gerichtet ist. Die Veresterung wird in Gegenwart eins suspendierten Feststoffkatalysators durchgeführt.

Es war demgegenüber Aufgabe der Erfindung, einen Reaktor für gas/flüssig oder gas/flüssig/fest-Reaktionen zur Verfügung zu stellen, der auch bei hohen Verweilzeiten der flüssigen oder flüssig/festen Phase eine weitgehende Annäherung an das thermodynamische gas/flüssig-Gleichgewicht auf Grund einer sehr guten Durchmischung sowie nach erfolgter Durchmischung und Reaktion eine weitgehende Auftrennung von gasförmiger und flüssiger Phase gewährleistet.

Der Reaktor sollte darüber hinaus mit einem möglichst kleinen Druckverlust für die von unten nach oben strömende Gasphase betrieben werden können.

Die Lösung geht aus von einem Reaktor für gas/flüssig oder gas/flüssig/fest-Reaktionen mit vertikal ausgerichteter Längsachse, mit Zuführung eines flüssigen oder flüssig/festen Eduktstroms im oberen Bereich des Reaktors und eines gasförmigen Stromes im unteren Bereich des Reaktors.

Die Erfindung ist gekennzeichnet durch
- mindestens zwei, in Längsrichtung übereinander angeordnete Kammern, wobei
- die Kammern voneinander durch flüssigkeitsdichte Böden getrennt sind,
- jede Kamme durch je einen Flüssigkeitsüberlauf mit der unmittelbar darunterliegenden Kammer verbunden ist und über den Flüssigkeitsüberlauf der untersten Kammer ein flüssiger Produktstrom abgezogen wird,
- der Gasraum oberhalb des Flüssigkeitsspiegels in jeder Kammer mit der jeweils unmittelbar darüber angeordneten Kammer durch ein oder mehrere Gaszuleitungsrohre verbunden ist, das (die) jeweils in einen Gasverteiler mit Öffnungen für den Gasaustritt unterhalb des Flüssigkeitsspiegels mündet, wobei die Öffnungen des Gasverteilers für den Gasaustritt vom Boden der Kammer um 40 % bis 90 % der Flüssigkeitshöhe in der Kammer, gemessen vom Boden der Kammer bis zum Flüssigkeitsüberlauf, beabstandet sind,
- sowie mit jeweils mindestens einem um jeden Gasverteiler vertikal angeordneten Leitblech, dessen oberes Ende unterhalb des Flüssigkeitsspiegels und dessen unteres Ende oberhalb des flüssigkeitsdichten Bodens der Kammer endet und das jede Kammer in einen oder mehrere begaste und in einen oder mehrere unbegaste Räume trennt, und wobei
- in einer oder mehreren, bevorzugt in allen Kammern in den unbegasten Räumen Einsätze zur Aufnahme von Katalysator-Füllkörpern vorgesehen sind, mit einem oder mehreren vertikalen, bevorzugt symmetrisch zu einander angeordneten, seitlich flüssigkeitsdurchlässigen Drainageschächten, die oben offen und unten geschlossen sind oder verikal angeordneten, perforierten Rohren, die oben offen und unten geschlossen sind, sowie mit flüssigkeitsdurchlässigen Wänden im Bereich der Leitbleche oder wobei
- in einer oder mehreren, bevorzugt in allen Kammern des Reaktors in den unbegasten Räumen ein Feststoffkatalysator eingebracht ist in Form einer mit Katalysator beschichteten geordneten Packung oder als ein mit Katalysator beschichteter Monolith.

Es wurde somit ein Apparat gefunden, der ohne bewegte Apparateteile, durch eine Air-Lift-Umwälzung der Flüssigkeit, eine ausgezeichnete Durchmischung bei mehrphasigen Reaktionen und eine nahezu konstante Zusammensetzung des Reaktionsgemisches jeweils über das gesamte Volumen in jeder Kammer gewährleistet, das heißt sowohl über deren Querschnitt als auch insbesondere über die Flüssigkeitshöhe, bei gleichzeitig einfacher Auftrennung zwischen flüssiger und gasförmiger Phase nach erfolgter Reaktion. Durch den Gasaustritt aus dem Gasverteiler in den Flüssigkeitsraum zwischen Gasverteiler und dem oder den um den Gasverteiler herum vertikal angeordneten Leitblech oder Leitblechen wird der hydrostatische Druck in diesem Flüssigkeitsraum gegenüber dem nicht begasten Flüssigkeitsraum abgesenkt, wodurch ein Druckgefälle entsteht, das in kinetische Energie umgesetzt wird. Dieses Druckgefälle setzt die Air-Lift-Umwälzung in Form einer Strömung in Gang, die im begasten Raum, das heißt im Raum zwischen dem Gasverteiler und dem oder den um den Gasverteiler herum angeordneten Leitblech (Leitblechen) nach oben gerichtet ist, im Bereich oberhalb des obersten Endes des Leitblechs (der Leitbleche) und unterhalb des Flüssigkeitsspiegels durch das Leitblech (die Leitbleche) umgelenkt wird, den nicht begasten Flüssigkeitsraum außerhalb des Leitblechs (der Leitbleche) von oben nach unten durchströmt und oberhalb des flüssigkeitsdichten Bodens der Kammer und unterhalb des untersten Endes des Leitblechs (der Leitbleche) erneut in eine von unten nach oben gerichtete Strömung umgelenkt wird, wodurch die Schlaufenbewegung geschlossen wird.

Der erfindungsgemäße Reaktor ist ein Apparat mit vertikal ausgerichteter Längsachse, d.h. ein hochstehender Apparat mit Zuführung eines flüssigen oder flüssig/festen Eduktstroms in seinem oberen Bereich und eines gasförmigen Stromes - Edukt und/oder Inertgas - in seinem unteren Bereich, das heißt mit Gegenstromführung des flüssigen oder flüssig-festen und des gasförmigen Stromes. Er ist besonders für eine kontinuierliche Verfahrensführung geeignet.

Der Reaktor ist aus mehreren, insbesondere zwischen 2 bis 200 Kammern, besonders bevorzugt aus zwischen 3 bis 50 übereinander angeordneten Kammern aufgebaut.

Die übereinander angeordneten Kammern können gleichermaßen auch als getrennte Apparate, mit entsprechenden Verbindungen, ausgebildet sein.

Die Geometrie des Reaktors ist häufig zylindrisch, es sind jedoch auch andere Geometrien, insbesondere eine quaderförmige Geometrie, möglich.

Die Kammern sind voneinander durch flüssigkeitsdichte Böden getrennt, wobei jede Kammer durch je einen Flüssigkeitsüberlauf mit der unmittelbar darunter liegenden Kammer verbunden ist. Der Flüssigkeitsüberlauf kann dabei beispielsweise in Form eines Rohres oder eines Schachtes ausgebildet sein und er kann sowohl innerhalb als auch außerhalb des Reaktors angeordnet sein. Insbesondere können die Flüssigkeitsüberläufe zwei aufeinanderfolgender Kammern jeweils an einander gegenüberliegenden Seiten des Reaktors angeordnet sein. Aus der untersten Kammer wird über deren Flüssigkeitsüberlauf ein flüssiger Produktstrom abgezogen.

Der Gasraum oberhalb des Flüssigkeitsspiegels in jeder Kammer ist mit der jeweils unmittelbar darüber angeordneten Kammer durch ein oder mehrere Gaszuleitungsrohre verbunden, das (die) jeweils in einen Gasverteiler mit Öffnungen für den Gasaustritt unterhalb des Flüssigkeitsspiegels mündet. Bezüglich der Anzahl und Anordnung der Gaszuleitungsrohre gibt es grundsätzlich keine Einschränkungen: es ist gleichermaßen möglich, ein einziges zentrales Gaszuleitungsrohr vorzusehen oder aber auch mehrere, über den Reaktorquerschnitt verteilt angeordnete Gaszuleitungsrohre. Ebenso ist es möglich, anstelle eines einzigen Gasverteilers pro Kammer mehrere getrennte Gasverteiler, jeweils mit Gaszuführung über ein oder mehrere Gaszuleitungsrohre, vorzusehen. In den Gasverteiler der untersten Kammer des Reaktors wird ein gasförmiger Strom über ein oder mehrere Gaszuleitungsrohre von außerhalb des Reaktors eingeleitet.

Es ist somit gleichermaßen möglich, einen einzigen Gasverteiler vorzusehen, mit Gaszuführung über ein oder mehrere Gaszuleitungsrohre, sowie auch mehrere miteinander nicht verbundene Gasverteiler, jeweils mit Gaszuführung über ein oder mehrere Gaszuleitungsrohre.

In einer bevorzugten Ausführungsvariante ist der Reaktor dergestalt ausgebildet, dass in jeder Kammer der Flüssigkeitsüberlauf tiefer als das obere Ende des Gaszuleitungsrohres (der Gaszuleitungsrohre) für die Gaszuführung liegt. Diese Ausführungsform sichert eine statisch bedingte Sperre, die das Abfließen von Flüssigkeit über das oder die Gaszuleitungsrohre in die darunter liegende Kammer verhindert.

Bezüglich der vorliegend einsetzbaren Gasverteiler gibt es keine grundsätzlichen Einschränkungen: wesentlich ist, daß der Gasverteiler das ihm über das oder die Gaszuleitungsrohre zugeführte Gas aus dem Gasraum der unmittelbar darunter liegenden Kammer unterhalb des Flüssigkeitsspiegels der Kammer, in der der Gasverteiler angeordnet ist, austreten läßt. Der Gasaustritt soll dabei bevorzugt möglichst gleichförmig erfolgen. Als Gasverteiler kann grundsätzlich jede handelsübliche Begasungseinrichtung eingesetzt werden, beispielsweise Gasverteiler in Form von Rohren, die mit Austrittsöffnungen für das Gas ausgestattet sind und beispielsweise horizontal, das heißt in einer Ebene parallel zum flüssigkeitsdichten Boden der Kammer angeordnet sein können. Es ist auch möglich, ringförmige Gasverteiler vorzusehen. Die Öffnungen für den Gasaustritt müssen sich jedoch stets unterhalb des Flüssigkeitsspiegels in der Kammer befinden, bevorzugt in einem Abstand zum Flüssigkeitsspiegel von etwa 10 % der gesamten Flüssigkeitshöhe in der Kammer, vorzugsweise von etwa 30 %, besonders bevorzugt von etwa 50 %. Es wurde gefunden, daß eine besonders günstige Eintauchtiefe der Öffnungen für den Gasaustritt unter dem Flüssigkeitsspiegel in der Kammer bei mindestens 50 mm liegt. Die Gasaustrittsöffnungen werden vorliegend nur durch das Gas, d. h. einphasig, durchströmt.

Das untere Ende des Gasverteilers ist bevorzugt vom Boden der Kammer beabstandet, d. h., der Gasverteiler ist nicht vollständig in die Flüssigkeit abgetaucht. Dennoch wird, durch den Air-Lift-Effekt, eine sehr gute Durchmischung der Flüssigkeit gewährleistet.

Die Öffnungen des Gasverteilers für den Gasaustritt sind vom Boden der Kammer beabstandet, bevorzugt um 40 % bis 90 % der Flüssigkeitshöhe in der Kammer, gemessen vom Boden der Kammer bis zum Flüssigkeitsüberlauf.

Zu einer vorteilhaften Ausführungsform sind die Öffnungen des Gasverteilers für den Gasaustritt unterhalb des oberen Endes des Gaszuleitungsrohres angeordnet. Durch diese besondere konstruktive Ausgestaltung wird eine Sperrwirkung gegen das Abfließen von Flüssigkeit durch das Gaszuleitungsrohr in der Art eines Siphons zur Verfügung gestellt.

In einer bevorzugten Ausführungsvariante ist der Gasverteiler (die Gasverteiler) in Form einer oben geschlossenen Haube ausgebildet mit Öffnungen für den Gasaustritt in deren unterem Teil.

Die Haube kann, bis auf die Durchtrittsöffnungen für das oder die Gaszuleitungsrohre für die Gaszuführung und die Gasaustrittsöffnungen in ihrem unteren Teil vollständig geschlossen sein.

Es ist jedoch auch möglich, die Haube in deren unterem Teil offen auszubilden.

Das obere geschlossene Ende der Haube kann unterhalb des Flüssigkeitsspiegels enden, es kann jedoch auch über den Flüssigkeitsspiegel hinaus, in den Gasraum, reichen.

Die Haube des Gasverteilers kann grundsätzlich jede geometrische Form haben; es ist beispielsweise möglich, daß sie aus mehreren miteinander verbundenen Teilen besteht, die im Querschnitt bevorzugt kreuzförmig und/oder parallel oder konzentrisch oder radial angeordnet sind.

Die Öffnungen für den Gasaustritt sind bezüglich Anzahl, Querschnitt und Abstand vom Flüssigkeitsspiegel in der Kammer bevorzugt in der Weise ausgebildet, daß der Druckverlust des gasförmigen Stromes im Gasverteiler im Bereich von 0,1 bis 50 mbar, bevorzugt von 0,5 bis 15 mbar, liegt.

Die Öffnungen für den Gasverteiler sind bevorzugt auf derselben Höhe zueinander angeordnet.

Sie können grundsätzlich jede beliebige geometrische Form haben, beispielsweise kreisförmig, dreieckig oder schlitzförmig sein.

Die Mittellinie der Öffnungen liegt dabei bevorzugt in einem Abstand von ca. 1 cm bis 15 cm vom unteren Ende der Haube. Alternativ ist es auch möglich, anstelle von Öffnungen das untere Ende der Haube mit gezacktem Rand auszubilden. In einer weiteren Alternative ist es möglich, das untere Ende der Haube in Form eines Ringverteilers auszubilden.

Die Anordnung der Öffnungen auf unterschiedlicher Höhe zueinander kann für einen Betrieb mit zwei oder mehreren Lastbereichen vorteilhaft sein.

Die Höhe der Öffnungen für den Gasaustritt wird nach Bedarf in Abhängigkeit von der konkreten, im Reaktor durchzuführenden Reaktion so gewählt, daß zum einen genügend Stoffaustauschfläche für die konkrete gas/flüssig oder gas/flüssig/fest-Reaktion angeboten wird und zum anderen genügend Antrieb für die Air-Lift-Umwälzung der Flüssigkeit zur Verfügung gestellt wird.

Um jeden Gasverteiler ist im erfindungsgemäßen Reaktor mindestens ein vertikales Leitblech angeordnet, dessen oberes Ende unterhalb des Flüssigkeitsspiegels in der Kammer endet, vom Boden der Kammer beabstandet ist und das jede Kammer in einen oder mehrere begaste sowie einen oder mehrere unbegaste Räume trennt.

Das Leitblech kann in einer bevorzugten Ausführungsform als zylindermantelförmiges Einsteckrohr ausgebildet sein. Gleichfalls möglich ist jedoch auch beispielsweise die Form eines einfachen ebenen Bleches.

Das mindestens eine Leitblech ist vom Flüssigkeitsspiegel sowie vom Boden der Kammer beabstandet, bevorzugt dergestalt, daß im wesentlichen keine Drosselung der Flüssigkeitsströmung durch das Leitblech erfolgt. Die Abstände des Leitblechs oder der Leitbleche zur Flüssigkeitsoberfläche sowie auch zum Boden der Kammer sind somit bevorzugt in der Weise festzulegen, daß sich die Strömungsgeschwindigkeit der Flüssigkeit bei der Umlenkung durch das Leitblech nicht oder nur geringfügig verändert.

Bezüglich der Gesamthöhe des Leitblechs gibt es grundsätzlich keine Einschränkungen. Diese kann insbesondere in Abhängigkeit von der gewünschten Verweilzeit pro Kammer, unter gleichzeitiger Berücksichtigung einer ausreichenden Durchmischung, entsprechend dimensioniert werden.

In einer bevorzugten Ausführungsform sind die flüssigkeitsdichten Böden und/oder die Gasverteiler und/oder die Leitbleche als Wärmetauscherplatten ausgebildet. Der Begriff Wärmetauscherplatten bezeichnet dabei in bekannter Weise im wesentlichen parallel zueinander angeordnete Bleche, die einen Zwischenraum begrenzen, durch den ein Wärmetauschmittel zwecks Zu- oder Abführung von Wärme geleitet werden kann.

In einer oder mehreren, bevorzugt in allen Kammern in den unbegasten Räumen sind Einsätze zur Aufnahme von Katalysator-Füllkörpern vorgesehen, mit einem oder mehreren vertikalen, bevorzugt symmetrisch zueinander angeordneten, seitlich flüssigkeitsdurchlässigen Drainageschächten, die oben offen und unten geschlossen sind, sowie mit flüssigkeitsdurchlässigen Wänden im Bereich der Leitbleche. Es ist bevorzugt, die Einsätze in der Weise auszubilden, daß sie die unbegasten Räume maximal nutzen, d.h. dieselben möglichst vollständig ausfüllen. Hierbei ist es bevorzugt, die Ausdehnung der Einsätze in vertikaler Richtung gleich oder nahezu gleich der vertikalen Ausdehnung der Leitbleche auszubilden. Die Einsätze sind bevorzugt in der Weise ausgebildet, daß sie einfach in die Leitbleche eingehängt und bei Bedarf, beispielsweise zwecks Wechsel der Katalysator-Füllkörper, entnommen werden können. Die Drainageschächte haben die Funktion, die Flüssigkeit möglichst gleichmäßig über die Katalysatorfüllung in Querrichtung zu verteilen. Sie müssen unten geschlossen sein, um eine Bypass-Strömung der Flüssigkeit durch die Katalysatorfüllung zu vermeiden. Die Einsätze weisen im Bereich der Leitbleche flüssigkeitsdurchlässige Wände auf; somit kann die Flüssigkeit, nachdem sie die Katalysatorfüllung durchströmt hat, sich entlang der Leitbleche in den unbegasten Räumen nach unten bewegen. Die flüssigkeitsdurchlässigen Wände können beispielsweise als Siebe oder als perforierte Bleche ausgebildet sein, ebenso wie die seitlichen Wände der Drainageschächte.

Es ist auch möglich, anstelle der Drainageschächte vertikal angeordnete, perforierte Rohre vorzusehen, die oben offen und unten geschlossen sind. Sie haben dieselbe Funktion wie die Drainageschächte, können jedoch fertigungstechnische Vorteile haben, insbesondere bei Reaktoren mit größerem Durchmesser.

Alternativ kann in einer oder mehreren, bevorzugt in allen unbegasten Kammern des Reaktors ein Feststoffkatalysator in Form von mit Katalysator beschichteten geordneten Packungen, oder als ein mit Katalysator beschichteter Monolith eingebracht sein.

Bevorzugt kann in einer oder mehreren, bevorzugt in allen unbegasten Kammern ein Ionenaustauscherharz eingebracht sein.

Der erfindungsgemäße Reaktor hat somit den Vorteil, daß er für gas/flüssig- oder gas/flüssig/fest-Reaktionen eine sehr gute Durchmischung der Flüssigkeit sowie eine sichere Abtrennung der Gasphase gewährleistet. Da es für den Antrieb der Air-Lift-Umwälzung lediglich erforderlich ist, daß der Gasaustritt aus dem Gasverteiler unterhalb des Flüssigkeitsspiegels in der Kammer erfolgt, wobei die Höhe der Abtauchung gegenüber dem Flüssigkeitsspiegel grundsätzlich in sehr weiten Grenzen variieren kann, wird mit dem erfindungsgemäßen Reaktor ein Apparat zur Verfügung gestellt, bei dem Flüssigkeitsverweilzeit und gasseitiger Druckverlust weitgehend entkoppelt sind, insbesondere, wenn die Abtauchung gering ist.

Er ist besonders vorteilhaft zur Durchführung von langsamen Gleichgewichtsreaktionen, die auf einen hohen Umsatzgrad gebracht werden sollen, häufig von 90 bis 99,9 %. Darüber hinaus kann mit dem erfindungsgemäßen Reaktor ein sehr breiter Bereich für den Flüssigkeitshold-up pro Boden und somit ein sehr breiter Verweilzeitbereich, von einigen Minuten bis zu mehreren Stunden, eingestellt werden.

Der Reaktor ist besonders geeignet zur Durchführung von gas/flüssig oder gas/flüssig/fest-Reaktionen, bei denen nicht ausschließlich die Stoffaustauschfläche den geschwindigkeitsbegrenzenden Schritt darstellt. Er ist weiter geeignet für kontinuierliche Reaktionen mit Reaktionsordnung von 1 oder größer, die auf einen hohen Umsatzgrad gebracht werden sollen, beispielsweise die Umsetzung von Propylenoxid mit Kohlendioxid zu Propylencarbonat sowie für Hydrierungen, beispielsweise für Farbzahlhydrierungen.

Der erfindungsgemäße Reaktor ist ganz besonders geeignet zur Durchführung von Gleichgewichtsreaktionen, die auf einen hohen Umsatzgrad gebracht werden sollen, und bei denen ein Koppelprodukt als Dampf kontinuierlich mit Inertgas oder mit einem der Reaktanden aus dem Reaktionsgemisch entfernt wird, um das Reaktionsgleichgewicht in der gewünschten Richtung zu verschieben. Beispiele hierfür sind Veresterungen, wie die Veresterung von Phthalsäure oder Phthalsäureanhydrid mit Alkoholen zu Phthalsäureestern, die vorzugsweise als Weichmacher Verwendung finden oder die Veresterung von Adipinsäure oder Acrylsäure mit Alkoholen zu deren Estern. Kennzeichnend für alle diese Reaktionen ist, daß das gebildete Wasser zwecks Verschiebung des Reaktionsgleichgewichtes kontinuierlich mit Inertgas oder bevorzugt mit Alkoholdampf im Gegenstrom aus dem Reaktionsgemisch entfernt wird. Weitere Beispiele sind Umesterungsreaktionen, insbesondere die Umesterung von Polytetrahydrofuran mit endständigen Acylgruppen in Gegenwart von niederen Alkoholen, bevorzugt von Methanol zu Polytetrahydrofuran mit endständigen Hydroxylgruppen, Veretherungen, Umlagerungen, Hydrolysen und Halbacetalbildungen.

Der erfindungsgemäße Reaktor kann auch vorteilhaft in Verbindung mit einem vorgeschalteten einphasig betriebenen Reaktor, insbesondere Rohrreaktor, eingesetzt werden, um das chemische Gleichgewicht bereits darin weitgehend zu ereichen.

Die Erfindung wird im folgenden anhand einer Zeichnung sowie eines Ausführungsbeispiels näher erläutert:

Es zeigen im einzelnen:
- Figur 1: einen Längsschnitt durch eine Ausführungsform einer Kammer eines erfindungsgemäßen Reaktors mit Einsätzen für Katalysator-Füllkörper mit Querschnitt in Figur 1A
- Figur 2: einen Längsschnitt durch eine weitere Ausführungsform einer Kammer mit Einsätzen für Katalysator-Füllkörper, mit Querschnitt in Figur 2A,
- Figur 3: eine schematische räumliche Darstellung der in Figur 1 im Längsschnitt gezeigten Ausführungsform und
- Figur 4: einen Längsschnitt durch eine weitere Ausführungsform einer Kammer eines erfindungsgemäßen Reaktors mit einem Einsatz für Katalysator-Füllkörper, mit Querschnitt in Figur 4A.

In den Figuren bezeichnen gleiche Bezugsziffern gleiche oder entsprechende Merkmale.

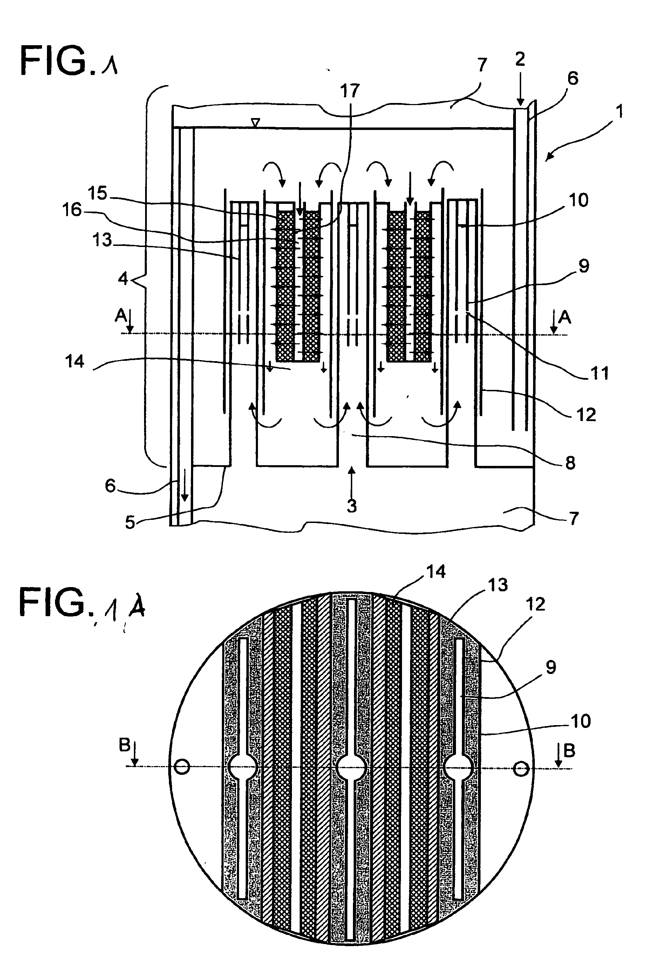

Fig. 1 zeigt beispielhaft eine von mehreren, in Längsrichtung übereinander angeordneten Kammern 4 eines Reaktors 1 mit Zuführung 2 eines flüssigen oder flüssig/festen-Eduktstroms im oberen Bereich und eines gasförmigen Stromes 3 im unteren Bereich des Reaktors 1, mit jeweils einem Boden 5 pro Kammer 4, Flüssigkeitsüberläufen 6, die beispielhaft innenliegend im Reaktor 1 dargestellt sind, mit jeweils einem Gasraum 7 oberhalb des Flüssigkeitsspiegels in jeder Kammer 4, der beispielhaft durch drei Gaszuleitungsrohre8 mit der jeweils darüber liegenden Kammer 4 verbunden ist und in einen Gasverteiler 9 in Form einer oben geschlossenen Haube 10 aus drei miteinander verbundenen Teilen mündet, mit Öffnungen 11 für den Gasaustritt in deren unterem Teil. Um den Gasverteiler 9 sind Leitbleche 12 angeordnet, die jeweils vom Flüssigkeitsspiegel und vom Boden der Kammer 4 beabstandet sind und die die Kammer 4 in mehrere begaste Räume 13 sowie mehrere unbegaste Räume 14 trennt.

Der Längsschnitt ist in der in Figur 1A mit B-B dargestellten Ebene gelegt, um gleichzeitig die Anordnung der Gaszuleitungsrohre8 und des Gasverteilers 9 bzw. der drei Teile desselben, zu veranschaulichen. Das Gas strömt über den oberen Bereich der Leitungsrohre in den Gasverteiler ein und tritt aus demselben, in dessen unterem Bereich, aus den Öffnungen 11 aus.

In der Querschnittsdarstellung in Fig. 1a ist die Form der Haube 10 des Gasverteilers 9 verdeutlicht, vorliegend beispielhaft als aus kreuzförmig und parallel angeordneten Teilen ausgebildet.

In den unbegasten Räumen 14 sind Einsätze 15 zur Aufnahme von, in der Figur durch gekreuzte Schraffur dargestellte Katalysator-Füllkörper, vorgesehen. Die Einsätze 15 haben Drainageschächte 16, die oben offen und unten geschlossen sind, und durch die die Flüssigkeit in Querrichtung, in der Zeichnung durch horizontale Pfeile angedeutet, die Katalysator-Füllkörper durchströmt. Die Flüssigkeit gelangt nach Durchströmen der Katalysator-Füllkörper an die Leitbleche 12 und bewegt sich dort nach unten, ehe sie erneut die gasdurchströmten Räume 13 von unten nach oben passiert, und damit die innere Schlaufenbewegung schließt.

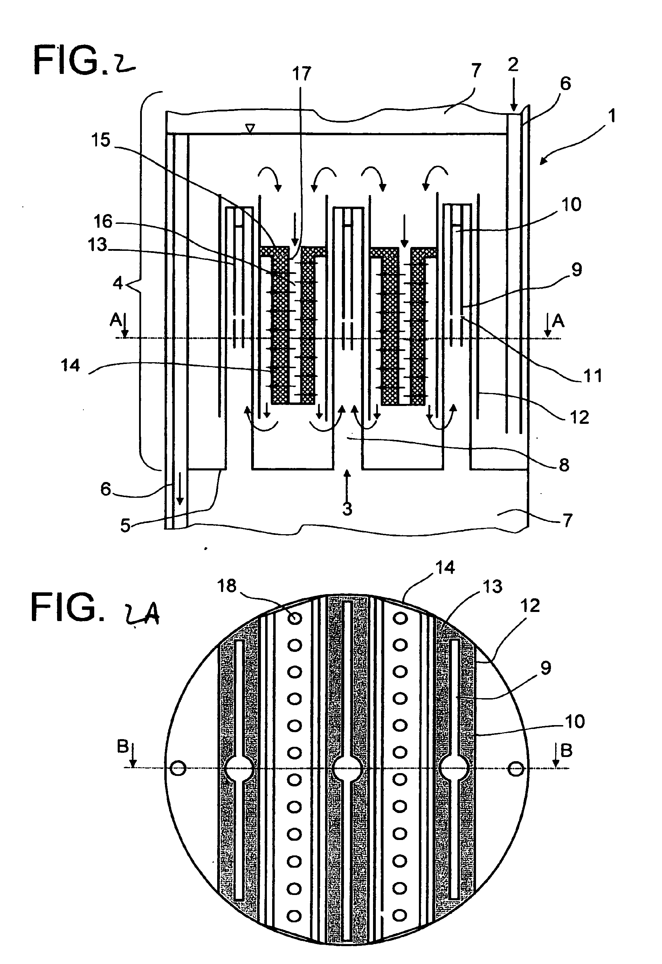

Die in Figur 2 dargestellte Ausführungsform unterscheidet sich von der Ausführungsform, die in Figur 1 dargestellt ist insofern, als anstelle von Drainageschächten 16 perforierte Rohre 18, wie in der Querschnittsdarstellung in Figur 2A deutlich erkennbar, vorgesehen sind.

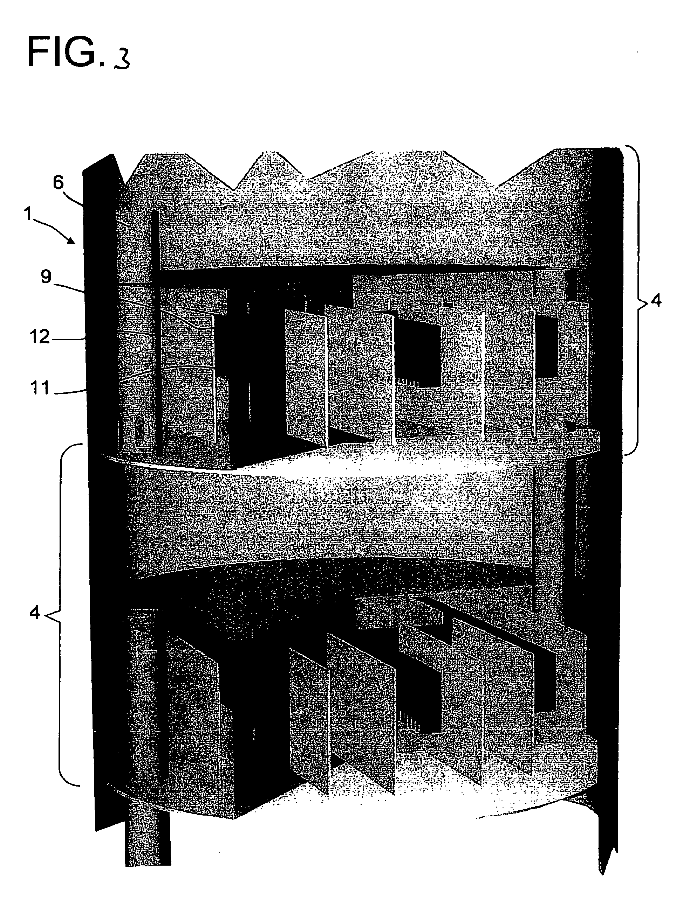

Figur 3 zeigt schematisch eine dreidimensionale Abbildung der in Figur 1 im Längsschnitt dargestellten Ausführungsform eines Reaktors 1 mit zwei übereinander angeordneten Kammern 4, mit Flüssigkeitsüberläufen 6, einem aus drei miteinander verbundenen Teilen aufgebauten Gasverteiler 9 mit beispielhaft kammartig ausgebildeten Austrittsöffnungen 11 für das Gas im unteren Bereich des Gasverteilers 9 sowie mit Leitblechen 12.

Aus Gründen der Übersichtlichkeit sind die Einsätze zur Aufnahme von Katalysator-Formkörpern nicht dargestellt.

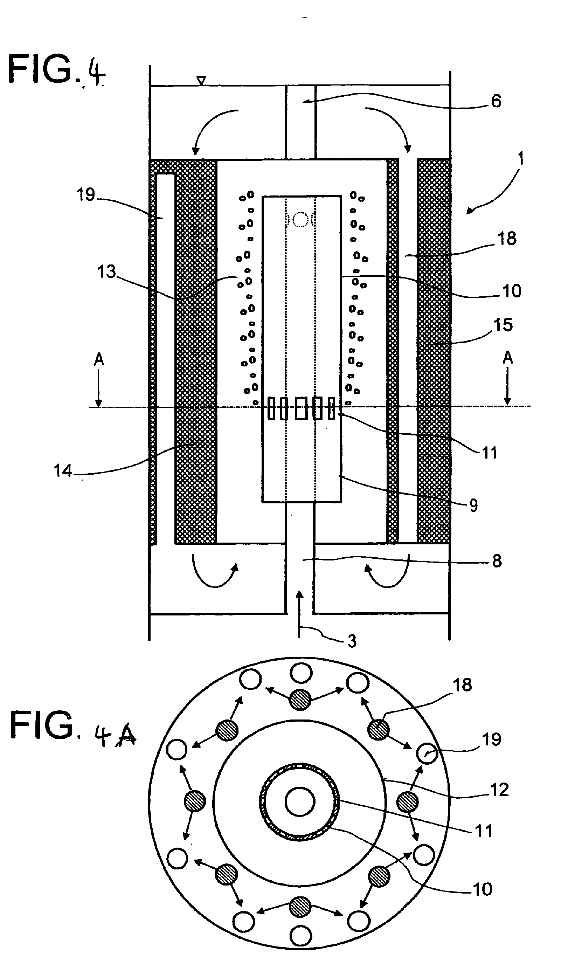

Figur 4 zeigt einen Längsschnitt durch eine Kammer 4 einer Ausführungsform eines erfindungsgemäßen Reaktors mit einem einzigen Gaszuleitungsrohr8 für die Zuführung eines Gasstroms 3 in einen Gasverteiler 9, der in Form einer einteiligen, oben geschlossenen Haube 10 ausgebildet ist.

Der Einsatz 15 weist Drainagerohre 18 auf, die oben geöffnet und unten geschlossen sind und darüber hinaus Rohre 19, die oben geschlossen und unten offen sind, und die der Ableitung der Flüssigkeit aus den unbegasten Räumen 14 dienen.

Die Querschnittsdarstellung, in der Ebene A/A (Figur 4A) verdeutlicht den kreisförmigen Querschnitt der Haube 10 sowie die über den Querschnitt des Gasverteilers 9 symmetrische Anordnung der Austrittsöffnungen 11 für das Gas.

### Beispiel

Drei Gew.-Teile Polytetrahydrofurandiacetat mit einem gewichtsmittleren Molekulargewicht von 1880 wurden schmelzflüssig mit 2 Gew.-Teilen Methanol in einer Mischstrecke gemischt und auf 65°C erwärmt. 300 Gew.-ppm einer methanolischen Natriummethylatlösung wurden als Katalysator zugegeben und das Gemisch in die oberste Kammer eines erfindungsgemäßen Reaktor mit 10 Kammern geleitet und zur Reaktion gebracht. Im Gegenstrom wurde in die unterste Kammer ein Methanoldampfstrom von 0,3 kg pro kg eingesetztem Polytetrahydrofurandiacetat zum Strippen des Koppelprodukts Methylacetat eingeleitet. Hierbei wurde in der obersten Kammer bereits ein Umsatz von ca. 96 % erreicht.

Die weitere Abreicherung des Methylacetats aus der Reaktionslösung bei damit verbundene Weiterreaktion der Umesterung, erfolgte in den darunter liegenden Kammern des erfindungsgemäßen Reaktors. Dabei wurde der flüssige Reaktionsaustrag aus jeder Kammer über Flüssigkeitsüberläufe in die jeweils nächstfolgende darunter liegende Kammer geleitet, bei mittleren Verweilzeiten von 14 min in jeder Kammer.

Das Methylacetat wurde in der untersten Kammer bis auf Restgehalte von < als 0,1 Gew.-% aus der Reaktionslösung entfernt.

Der im Gegenstrom zur Reaktionsflüssigkeit aufsteigende Methanoldampf reicherte sich von Kammer zu Kammer immer weiter mit Methylacetat an, während in der Flüssigphase die Methylacetatgehalte in den Kammern von oben nach unten entsprechend abnahmen.

Durch die Verringerung der Methylacetatgehalte bei einer Verweilzeit von 15 min pro Kammer wurde ein Umsatzgrad des eingesetzten Polytetrahydrofurandiacetats in der letzten, untersten, Kammer von 99,9 % erreicht.

Die Flüssigkeitshöhe pro Kammer betrug jeweils 25 cm. In jeder Kammer war ein Gasverteiler angeordnet, mit Öffnungen für den Gasaustritt in einem Abstand von 10 cm unterhalb des Flüssigkeitsspiegels. Aufgrund dieser geringen hydrostatischen Druckdifferenz ergab sich lediglich eine geringe Temperaturspreizung, von ca. 65 bis ca. 68°C über die Höhe des flüssigen, sich im Siedezustand befindenden Reaktionsgemisches in jeder Kammer. Dies hatte zur Folge, daß keine farbgebenden Komponenten und somit eine ausgezeichnete Produktqualität erhalten wurde.

Die Gasverteiler befanden sich jeweils innerhalb eines Einsteckrohrs, das von der Flüssigkeitsoberfläche sowie vom Boden der Kammer beabstandet war und das die Kammer in einen begasten und einen nicht begasten Raum mit einem Querschnittsflächenverhältnis von 60 : 40 unterteilte. Durch die gute Durchmischung in den Kammern erreichte die Anreicherung des Methylacetats im Methanoldampf ca. 85 bis 95 % des Dampf-Flüssigkeits-Gleichgewichtes.

### Vergleichsbeispiel

Zum Vergleich wurde dieselbe Umesterungsreaktion in einer vierstufigen Rührkesselkaskade durchgeführt. Hierfür wurde gegenüber der Gesamtverweilzeit von 2,5 h für das Verfahren im erfindungsgemäßen Reaktor eine mittlere Verweilzeit von etwa 8 h benötigt. Zum Strippen des Koppelprodukts Methylacetat war eine Methanoldampfmenge von 0,8 bis 0,9 kg pro kg eingesetztem Polytetrahydrofurandiacetat erforderlich, das heißt etwa das Dreifache der für das Verfahren im erfindungsgemäßen Reaktor erforderlichen Methanoldampfmenge.

## Patentansprüche

1. Reaktor (1) für gas/flüssig oder gas/flüssig/fest-Reaktionen mit vertikal ausgerichteter Längsachse, mit Zuführung (2) eines flüssigen oder flüssig/festen Eduktstroms im oberen Bereich des Reaktors und eines gasförmigen Stromes (3) im unteren Bereich des Reaktors (1), **gekennzeichnet durch**
- mindestens zwei, in Längsrichtung übereinander angeordnete Kammern (4), wobei
- die Kammern (4) voneinander **durch** flüssigkeitsdichte Böden (5) getrennt sind,
- jede Kammer (4) **durch** je einen Flüssigkeitsüberlauf (6) mit der unmittelbar darunterliegenden Kammer (4) verbunden ist und über den Flüssigkeitsüberlauf (6) der untersten Kammer (4) ein flüssiger Produktstrom abgezogen wird,
- der Gasraum (7) oberhalb des Flüssigkeitsspiegels in jeder Kammer (4) mit der jeweils unmittelbar darüber angeordneten Kammer (4) **durch** ein oder mehrere Gaszuleitungsrohre (8) verbunden ist, das (die) jeweils in einen Gasverteiler (9) mit Öffnungen (11) für den Gasaustritt unterhalb des Flüssigkeitsspiegels mündet, wobei die Öffnungen (11) des Gasverteilers (9) für den Gasaustritt vom Boden (5) der Kammer (4) um 40 % bis 90 % der Flüssigkeitshöhe in der Kammer (4), gemessen vom Boden (5) der Kammer (4) bis zum Flüssigkeitsüberlauf, beabstandet sind,
- sowie mit jeweils mindestens einem um jeden Gasverteiler (9) vertikal angeordneten Leitblech (12), dessen oberes Ende unterhalb des Flüssigkeitsspiegels und dessen unteres Ende oberhalb des flüssigkeitsdichten Bodens (5) der Kammer (4) endet und das jede Kammer (4) in einen oder mehrere begaste (13) und in einen oder mehrere unbegaste (14) Räume trennt, und wobei
- in einer oder mehreren, bevorzugt in allen Kammern (4) in den unbegasten Räumen (14) Einsätze (15) zur Aufnahme von Katalysator-Füllkörpern vorgesehen sind, mit einem oder mehreren vertikalen, bevorzugt symmetrisch zu einander angeordneten, seitlich flüssigkeitsdurchlässigen Drainageschächten (16), die oben offen und unten geschlossen sind oder vertikal angeordneten, perforierten Rohren (18), die oben offen und unten geschlossen sind, sowie mit flüssigkeitsdurchlässigen Wänden (17) im Bereich der Leitbleche (12) oder wobei
- in einer oder mehreren, bevorzugt in allen Kammern (4) des Reaktors (1) in den unbegasten Räumen (14) ein Feststoffkatalysator eingebracht ist in Form einer mit Katalysator beschichteten geordneten Packung oder als ein mit Katalysator beschichteter Monolith.

2. Reaktor (1) nach Anspruch 1, **dadurch gekennzeichnet, daß** die Öffnungen (11) des Gasverteilers (9) für den Gasaustritt unterhalb des oberen Endes des Gaszuleitungsrohres (9) angeordnet sind.

3. Reaktor (1) nach Anspruch 1 oder 2, **dadurch gekennzeichnet, daß** der Gasverteiler (9) siphonartig in Form einer oben geschlossenen Haube (10), ausgebildet ist.

4. Reaktor (1) nach Anspruch 3, **dadurch gekennzeichnet, daß** die Haube des siphonartigen Gasverteilers in ihrem unteren Teil offen ist.

5. Reaktor (1) nach Anspruch 3 oder 4, **dadurch gekennzeichnet, daß** die Haube(n) (10) des (der) siphonartigen Gasverteiler(s) (9) aus zwei oder mehreren miteinander verbundenen Teilen gebildet ist (sind), die im Querschnitt kreuzförmig und/oder parallel oder konzentrisch oder radial angeordnet sind.

6. Reaktor (1) nach einem der Ansprüche 1 bis 5, **dadurch gekennzeichnet, daß** man die Anzahl und Größe der Öffnungen (11) für den Gasaustritt sowie deren Abstand vom Flüssigkeitsspiegel in der Kammer (4) in der Weise festlegt, daß der Druckverlust des gasförmigen Stromes im Gasverteiler (9) im Bereich von 0,1 bis 50 mbar, bevorzugt von 0,5 bis 10 mbar, liegt.

7. Reaktor (1) nach einem der Ansprüche 1 bis 6, **dadurch gekennzeichnet, daß** die Öffnungen (11) für den Gasaustritt auf jeweils gleicher Höhe zueinander angeordnet sind.

8. Reaktor (1) nach einem der Ansprüche 3 bis 7, **dadurch gekennzeichnet, daß** die Öffnungen (11) für den Gasaustritt im unteren Teil der Haube(n) (10) in einem Abstand von 1 bis 15 cm vom unteren Ende der Haube(n) (10) angeordnet sind.

9. Reaktor (1) nach einem der Ansprüche 1 bis 8, **dadurch gekennzeichnet, daß** das (die) Leitblech(e) jeweils derart zur Flüssigkeitsoberfläche sowie zum Boden der Kammer (4) beabstandet ist (sind), daß im wesentlichen keine Drosselung der Flüssigkeitsströmung durch das (die) Leitblech(e) (12) erfolgt.

10. Reaktor (1) nach einem der Ansprüche 1 bis 9, **dadurch gekennzeichnet, daß** das jeweils mindestens eine um jeden Gasverteiler (9) vertikal angeordnete Leitblech (12) in Form eines Einsteckrohrs ausgebildet ist.

11. Reaktor (1)nach einem der Ansprüche 1 bis 10, **dadurch gekennzeichnet, daß** das (die) Leitblech(e) und der (die) Gasverteiler (9) dergestalt angeordnet sind, daß die unbegaste Querschnittsfläche im Bereich von 10 bis 80 %, bevorzugt von 40 bis 60 %, besonders bevorzugt 50 % der Summe von begaster und unbegaster Querschnittsfläche beträgt.

12. Reaktor (1) nach einem der Ansprüche 1 bis 11, **dadurch gekennzeichnet, daß** die flüssigkeitsdichten Böden (5) und/oder die Gasverteiler (9) und/oder die Leitbleche (12) als Wärmetauscherplatten ausgebildet sind.

13. Reaktor (1) nach einem der Ansprüche 1 bis 12, **dadurch gekennzeichnet, daß** anstelle der Drainageschächte (16) vertikal angeordnete perforierte Rohre (18) vorgesehen sind, die oben offen und unten geschlossen sind.

14. Verfahren zur Durchführung von gas/flüssig/fest-Reaktionen in einem Reaktor (1) nach einem der Ansprüche 1 bis 13, **dadurch gekennzeichnet, daß** in einer oder mehreren, bevorzugt in allen unbegasten Kammern (4) ein Ionenaustauscherharz eingebracht ist.

15. Verwendung eines Reaktors (1) nach einem der Ansprüche 1 bis 13 oder eines Verfahrens nach Anspruch 14 zur Durchführung von Gleichgewichtsreaktionen, insbesondere von Umesterungen von Acyloxyendgruppen enthaltendem Polytetrahydrofuran, Veresterungen, insbesondere von Phthalsäure mit höheren Alkoholen, Veretherungen, Umlagerungen, Hydrolysen und Halbacetalbildungen.

16. Verwendung nach Anspruch 15, **gekennzeichnet durch** einen vorgeschalteten einphasig betriebenen Reaktor.

## Claims

1. A reactor (1) for gas/liquid or gas/liquid/solid reactions having a vertical longitudinal axis and an inlet (2) for a liquid or liquid/solid feed stream in the upper region of the reactor and an inlet (3) for a gaseous stream in the lower region of the reactor (1), which comprises
- at least two chambers (4) arranged above one another in the longitudinal direction, where
- the chambers (4) are separated from one another by liquid-tight bottom plates (5),
- each chamber (4) is connected via a liquid overflow (6) to the chamber (4) located immediately underneath and a liquid product stream is taken off via the liquid overflow (6) of the bottommost chamber (4),
- the gas space (7) above the liquid surface in each chamber (4) is connected to the chamber (4) located immediately above it by one or more gas guide tubes (8) which opens (each open) into a gas distributor (9) provided with openings (11) for exit of gas below the liquid surface, where the openings (11) of the gas distributor (9) for exit of gas are located at a distance from the bottom plate (5) of the chamber (4) which corresponds to from 40% to 90% of the height of liquid in the chamber (4), measured from the bottom plate (5) of the chamber (4) to the liquid overflow,
- and each chamber is provided with at least one guide plate (12) which is arranged vertically around each gas distributor (9) and whose upper end is below the liquid surface and whose lower end is above the liquid-tight bottom plate (5) of the chamber (4) and which divides each chamber (4) into one or more spaces into which gas flows (13) and one or more spaces into which gas does not flow (14), and where
- inserts (15) for accommodating catalyst packing elements, which inserts have one or more vertical, preferably symmetrically arranged, drainage shafts (16) whose sides are permeable to liquid and which are open at the top and closed at the bottom or vertically arranged perforated tubes (18) which are open at the top and closed at the bottom, with the inserts (15) also having liquid-permeable walls (17) in the region of the guide plates (12), are provided in the spaces into which gas does not flow (14) in one or more, preferably all, chambers (4) or where
- a solid catalyst is installed in the spaces into which gas does not flow (14) in one or more, preferably all, chambers (4) of the reactor (1) in the form of a catalyst-coated ordered packing or as a catalyst-coated monolith.

2. The reactor according to claim 1, wherein the openings (11) of the gas distributor (9) for exit of gas are located below the upper end of the gas guide tube (9).

3. The reactor (1) according to claim 1 or 2, wherein the gas distributor (9) has a siphon like configuration in the form of a hood (10) closed at the top.

4. The reactor (1) according to claim 3, wherein the hood of the siphon like gas distributor is open in its lower part.

5. The reactor (1) according to claim 3 or 4, wherein the hood(s) (10) of the siphon like gas distributor(s) (9) is (are) made up of two or more parts which are connected to one another and, in cross section, are arranged in the form of a cross and/or parallel or concentrically or radially.

6. The reactor (1) according to any of claims 1 to 5, wherein the number and size of the openings (11) for the exit of gas and their distance from the liquid surface in the chamber (4) are selected so that the pressure drop of the gaseous stream in the gas distributor (9) is in the range from 0.1 to 50 mbar, preferably from 0.5 to 10 mbar.

7. The reactor (1) according to any of claims 1 to 6, wherein the openings (11) for the exit of gas are each located at the same height relative to one another.

8. The reactor (1) according to any of claims 3 to 7, wherein the openings (11) for the exit of gas are located in the lower part of the hood(s) (10) at a distance of from 1 to 15 cm from the lower end of the hood(s) (10).

9. The reactor (1) according to any of claims 1 to 8, wherein the guide plate(s) is (are each) at such a distance from the liquid surface and from the bottom plate of the chamber (4) that substantially no throttling of the liquid flow by the guide plate(s) (12) occurs.

10. The reactor (1) according to any of claims 1 to 9, wherein at least one guide plate (12) arranged vertically around each gas distributor (9) is in the form of a push-in tube.

11. The reactor (1) according to any of claims 1 to 10, wherein the guide plate(s) and the gas distributor(s) (9) is (are) arranged in such a way that the cross-sectional area through which gas does not flow is in the range of from 10 to 80%, preferably from 40 to 60%, particularly preferably 50%, of the sum of the cross-sectional areas through which gas flows and through which gas does not flow.

12. The reactor (1) according to any of claims 1 to 11, wherein the liquid-tight trays (5) and/or the gas distributors (9) and/or the guide plates (12) are configured as heat exchanger plates.

13. The reactor (1) according to any of claims 1 to 12, wherein vertical perforated tubes (18) which are open at the top and closed at the bottom are provided in place of the drainage shafts (16).

14. A process for carrying out gas/liquid/solid reactions in a reactor (1) according to any of claims 1 to 13, wherein an ion exchange resin is installed in one or more, preferably in all, chambers (4) through which gas does not flow.

15. The use of a reactor (1) according to any of claims 1 to 13 or a process according to claim 14 for carrying out equilibrium reactions, in particular transesterifications of polytetrahydrofuran comprising acyloxy end groups, esterifications, in particular of phthalic acid with higher alcohols, etherifications, rearrangements, hydrolyses and hemiacetal formation reactions.

16. The use according to claim 15, wherein a reactor in which the reactants are present as a single phase is installed upstream.

## Revendications

1. Réacteur (1) pour réactions gaz/liquide ou gaz/liquide/solide équipé d'un axe longitudinal orienté de manière verticale, comprenant une amenée (2) d'un flux de réactif liquide ou liquide/solide dans la zone supérieure du réacteur et d'un flux gazeux (3) dans la zone inférieure du réacteur (1), **caractérisé par** :
- au moins deux chambres (4) superposées dans le sens longitudinal,
- les chambres (4) étant séparées les unes des autres par des plateaux étanches aux liquides (5),
- chaque chambre (4) est reliée à la chambre (4) disposée directement au-dessous respectivement par un trop-plein de liquide (6) et un flux de produit liquide est soutiré par l'intermédiaire du trop-plein de liquide (6) de la chambre la plus inférieure (4),
- le compartiment gazeux (7) au-dessus de la surface du liquide dans chaque chambre (4) est respectivement relié à la chambre (4) disposée directement au-dessus par une ou plusieurs conduites d'arrivée de gaz (8), qui débouche/débouchent respectivement dans un distributeur de gaz (9) présentant des ouvertures (11) pour l'échappement du gaz au-dessous de la surface du liquide, les ouvertures (11) du distributeur de gaz (9) pour l'échappement du gaz étant disposées à une distance du plateau (5) de la chambre (4) correspondant à 40 à 90 % du niveau de liquide dans la chambre (4), mesurée du sol (5) de la chambre (4) au trop-plein de liquide,
- ainsi qu'au moins une tôle de guidage (12) disposée de manière verticale respectivement autour de chaque distributeur de gaz (9), dont l'extrémité supérieure arrive au-dessous de la surface du liquide et dont l'extrémité inférieure arrive au-dessus du plateau étanche aux liquides (5) de la chambre (4) et qui sépare chaque chambre (4) en un ou plusieurs espaces recevant du gaz (13) et en un ou plusieurs espaces ne recevant pas de gaz (14), et
- dans une ou plusieurs, de préférence dans toutes les chambres (4), des inserts (15) étant prévus dans les espaces ne recevant pas de gaz (14) pour recevoir les corps de remplissage du catalyseur, comprenant un ou plusieurs puits de drainage (16) verticaux perméables aux liquides de manière latérale, de préférence disposés de manière symétrique les uns par rapport aux autres, qui sont ouverts en haut et fermés en bas, ou bien des tuyaux perforés (18) disposés de manière verticale, qui sont ouverts en haut et fermés en bas, ainsi que des parois perméables aux liquides (17) dans la zone des tôles de guidage (12) ou
- dans une ou plusieurs, de préférence dans toutes les chambres (4) du réacteur (1), un catalyseur solide est introduit dans les espaces ne recevant pas de gaz (14), sous la forme d'une garniture structurée recouverte de catalyseur ou en tant que monolithe recouvert de catalyseur.

2. Réacteur (1) selon la revendication 1, **caractérisé en ce que** les ouvertures (11) du distributeur de gaz (9) sont disposées sous l'extrémité supérieure de la conduite d'arrivée de gaz (8) pour l'échappement du gaz.

3. Réacteur (1) selon la revendication 1 ou 2, **caractérisé en ce que** le distributeur de gaz (9) est conçu, à la manière d'un siphon, sous la forme d'un couvercle (10) fermé en haut.

4. Réacteur (1) selon la revendication 3, **caractérisé en ce que** le couvercle du distributeur de gaz semblable à un siphon est ouvert dans sa partie inférieure.

5. Réacteur (1) selon la revendication 3 ou 4, **caractérisé en ce que** le(s) couvercle(s) (10) du (des) distributeur(s) de gaz (9) semblable(s) à un siphon est (sont) constitué(s) de deux parties reliées l'une à l'autre ou plus, qui sont disposées, en section transversale, en forme de croix et/ou de manière parallèle ou concentrique ou radiale.

6. Réacteur (1) selon l'une des revendications 1 à 5, **caractérisé en ce que** l'on détermine le nombre et la taille des ouvertures (11) pour l'échappement du gaz ainsi que leur distance par rapport à la surface du liquide dans la chambre (4), de telle manière que la perte de pression du flux gazeux dans le distributeur de gaz (9) se situe dans la plage allant de 0,1 à 50 mbar, de préférence de 0,5 à 10 mbar.

7. Réacteur (1) selon l'une des revendications 1 à 6, **caractérisé en ce que** les ouvertures (11) pour l'échappement du gaz sont disposées respectivement à la même hauteur les unes par rapport aux autres.

8. Réacteur (1) selon l'une des revendications 3 à 7, **caractérisé en ce que** les ouvertures (11) pour l'échappement du gaz dans la partie inférieure du (des) couvercle(s) (10) sont disposées à une distance de 1 à 15 cm de l'extrémité inférieure du (des) couvercle(s) (10).

9. Réacteur (1) selon l'une des revendications 1 à 8, **caractérisé en ce que** la (les) tôles de guidage est (sont) respectivement éloignée(s) de la surface du liquide ainsi que du plateau de la chambre (4), de telle sorte qu'il ne se produise pour l'essentiel aucun étranglement du flux de liquide en raison de la (des) tôle(s) de guidage (12).

10. Réacteur (1) selon l'une des revendications 1 à 9, **caractérisé en ce que** l'au moins une tôle de guidage (12) disposée respectivement de manière verticale autour de chaque distributeur de gaz (9) est conçue sous la forme d'un tuyau d'insertion.

11. Réacteur (1) selon l'une des revendications 1 à 10, **caractérisé en ce que** la (les) tôle(s) de guidage et le (les) distributeur(s) de gaz (9) sont disposés de telle sorte que la surface de la section ne recevant pas de gaz s'élève à une valeur comprise dans la plage allant de 10 à 80 %, de préférence de 40 à 60 %, de manière particulièrement préférée à une valeur égale à 50 % de la somme des surfaces de la section recevant du gaz et ne recevant pas de gaz.

12. Réacteur (1) selon l'une des revendications 1 à 11, **caractérisé en ce que** les plateaux étanches aux liquides (5) et/ou les distributeurs de gaz et/ou les tôles de guidage (12) sont conçus en tant que plaques d'échangeur de chaleur.

13. Réacteur (1) selon l'une des revendications 1 à 12, **caractérisé en ce que**, à la place des puits de drainage (16), sont prévus des tuyaux perforés (18) disposés de manière verticale, qui sont ouverts en haut et fermés en bas.

14. Procédé de réalisation de réactions gaz/liquide/solide dans un réacteur (1) selon l'une des revendications 1 à 13, **caractérisé en ce que**, dans une ou plusieurs, de préférence dans toutes les chambres (4) ne recevant pas de gaz est introduite une résine échangeuse d'ions.

15. Utilisation d'un réacteur (1) selon l'une des revendications 1 à 13 ou d'un procédé selon la revendication 14 pour réaliser des réactions d'équilibre, en particulier des transestérifications de polytétrahydrofurane contenant des groupes terminaux acyloxy, des estérifications, en particulier d'acide phtalique par des polyalcools superieurs, des éthérifications, des transformations, des hydrolyses, et des formations d'hémiacétals.

16. Utilisation selon la revendication 15, **caractérisée par** un réacteur à fonctionnement monophasé disposé en amont.
